# EUROPÄISCHE PATENTANMELDUNG

(11) **EP 1 847 827 A1**
(43) Veröffentlichungstag der Anmeldung: **24.10.2007**
(21) Anmeldenummer: 06008164.3
(22) Anmeldetag: 20.04.2006
(51) Int. Cl.: G01N 21/35, G01N 21/61

(54) **Nichtdispersiver Infrarot-Gasanalysator**

(71) Anmelder: ABB PATENT GmbH, 68526 Ladenburg (DE)
(72) Erfinder: Fabinski, Walter, Dipl.-Ing., 65830 Kriftel (DE); Laschinski, Gerd, 51375 Leverkusen (DE)
(74) Vertreter: Schmidt, Karl Michael

(57) **Zusammenfassung**

Nichtdispersiver Infrarot-Gasanalysator zur Messung von Gaskonzentrationen, umfassend eine in eine Messkammer (2) sowie eine längs hierzu benachbart angeordnete Vergleichskammer (3) unterteilte Messküvette (1), welche eine eingangsseitig angeordnete IR-Strahlungsquelle (4) mit Modulationseinrichtung (5) längs parallel durchleuchtet, deren jeweils durch Absorptionsverluste geschwächter Lichtstrahl ein ausgangsseitig angeordneter Detektor (6) zur Gaskonzentrationsermittlung erfasst, wobei Spiegelmittel zum Auftrennen des Strahlengangs der Messkammer (2) vorgesehen sind, um diesen durch eine an der Trennstelle an die Messküvette (1) angefügte Langwegküvette (8) zu leiten.

## Beschreibung

Die vorliegende Erfindung betrifft einen nichtdispersiven Infrarot-Gasanalysator zur Messung von Gaskonzentrationen, umfassend eine in eine Messkammer sowie eine längs hierzu benachbart angeordnete Vergleichskammer unterteilte Messküvette, welche eine eingangsseitig angeordnete IR-Strahlungsquelle mit Modulationseinrichtung längs parallel durchleuchtet, deren jeweils durch Absorptionsverluste geschwächter Lichtstrahl mindestens ein ausgangsseitig angeordneter Detektor zur Gaskonzentrationsermittlung erfasst.

Das Einsatzgebiet derartiger nach dem Prinzip der nichtdispersiven Infrarotspektroskopie (NDIR) arbeitenden Gasanalysatoren ist weit gespannt und umfasst unter anderem die Rauchgasanalytik, die Prozessmesstechnik in der chemischen Verfahrenstechnik sowie neuerdings verstärkt den Bereich Raumluftmessung und Klima- oder Luftgüteregelung in Gebäuden. Neben der hier gattungsgemäßen NDIR-Messtechnik werden auch sogenannte Langwegküvetten (LWK) zur Gasanalyse eingesetzt, welche ebenfalls nach dem Prinzip der Infrarotspektroskopie arbeiten und zur quantitativen Bestimmung der Konzentration von bestimmten Stoffen in Gasen verwendet werden, wobei die Stärke der Absorption bestimmter Infrarotlinien ein Maß für die Konzentration der Stoffe ist. Langwegküvetten werden vornehmlich zur Ermittlung niedriger Konzentrationen genutzt; herkömmliche NDIR-Gasanalysatoren mit geteilter Mess- und Vergleichsküvette eignen sich dagegen vornehmlich zur Ermittlung höherer Gaskonzentrationen.

Aus der DE 10 2004 031 643 A1 geht ein gattungsgemäßer NDIR-Gasanalysator hervor. Der Gasanalysator besteht im Wesentlichen aus einer Messküvette, welche von einer IR-Strahlung durchstrahlt wird, die von einer eingangsseitig der Messküvette angeordneten Strahlungsquelle emittiert wird. Nach Durchstrahlung des zu messenden Gases trifft der Lichtstrahl auf einen Detektor, der zu Gaskonzentrationsermittlung mit einer nachgeordneten Auswerteeinheit in Verbindung steht. Auf dem Weg durch die Messküvette wird die von der IR-Strahlungsquelle abgestrahlte Anfangsintensität durch Absorptionsprozesse abgeschwächt. Für den Zusammenhang zwischen der zu bestimmenden Gaskonzentration und der Intensitätsabschwächung gilt das Lambert'sche Gesetz. Die Erzeugung eines Detektorsignals mit ausreichendem Signal-/Rauschverhältnis erfordert eine Modulation der von der IR-Strahlungsquelle ausgehenden Strahlung. Das zu messende Gas gelangt entweder im Diffusionsbetrieb oder mit Hilfe einer Pumpe in die Messküvette. Der Detektor erfasst die Strahlungsminderung und wandelt die im Detektor auftretenden Druckstöße in ein elektrisches Signal um. Da die Absorptionslinien der Messkomponente mit denen des Detektor-Füllgases koinzidieren, entsteht im Allgemeinen eine hohe Selektivität und zwar haben andere Gase ein Absorptionsspektrum, dass von dem der Messkomponenten abweicht, jedoch kann es zu Überlappungen der Spektren kommen. In solchen Fällen ist die entstehende Querempfindlichkeit ein begrenzter Faktor. Im Allgemeinen besitzen die hier interessierenden Gasanalysatoren neben dem Messstrahlengang noch einen parallel hierzu angeordneten Vergleichsstrahlengang, um eine höhere Nullpunkt-Stabilität herzustellen. Zu diesem Zwecke werden die Messküvetten doppelt - mit einer Messkammer sowie einer Vergleichskammer - ausgeführt.

Derartige NDIR-Gasanalysatoren lassen sich recht einfach fertigen, eignen sich wegen des recht kurzen Strahlengangs jedoch eher für größere Messbereiche.

Für kleinere Messbereiche eignen sich dagegen die Langwegküvetten (LWK) besser. Hierbei durchläuft der von einer IR-Strahlungsquelle ausgesandte Lichtstrahl eine Küvette mit Hilfe mehrerer konvokal zueinander angeordneter Spiegel mehrfach, um so die Nachweisempfindlichkeit durch eine größere Schichtdicke des zu untersuchenden Messgases zu erhöhen. Je nach Aufbau lassen sich Langwegküvetten unterteilen in White-Zellen sowie Harriet-Zellen. Durch die nach dem jeweiligen Prinzip erzeugte Verlängerung der optischen Weglänge wird die Empfindlichkeit erhöht. Da sich gleichzeitig die Weglänge auch für die begleitenden Störkomponenten erhöht, verstärkt sich deren Einfluss, so dass nicht in jedem Fall ein messtechnischer Vorteil zu erwarten ist. Vielmehr benötigen Langwegküvetten besondere Vorkehrungen, die die Querempfindlichkeit minimieren, oder es werden solche Messverfahren eingesetzt, die durch zusätzliche Maßnahmen Störeinflüsse kompensieren. Dazu gehört beispielsweise bei Einsatz des NDIR-Prinzips, dass durch Querverrechnung Störeinflüsse signalverarbeitungstechnisch unterdrückt. Dies erfordert jedoch zusätzlichen rechentechnischen Aufwand.

Es ist daher die Aufgabe der vorliegende Erfindung, einen Gasanalysator zur Messung von Gaskonzentrationen bereitzustellen, der sich durch einen einfachen Aufbau auszeichnet und auch für kleine Messbereich einsetzbar ist.

Die Aufgabe wird ausgehend von einem nichtdispersiven Infrarot-Gasanalysator gemäß dem Oberbegriff von Anspruch 1 in Verbindung mit dessen kennzeichnenden Merkmalen gelöst. Die nachfolgenden abhängigen Ansprüche geben vorteilhafte Weiterbildungen der Erfindung wieder.

Die Erfindung schließt die technische Lehre ein, dass bei einem nichtdispersiven Infrarot-Gasanalysator die Messkammer mit Spiegelmitteln zum Auftrennen des Strahlengangs ausgestattet ist, um diesen durch eine an der Trennstelle an die Messküvette angefügte Langwegküvette zu leiten.

Der Vorteil der erfindungsgemäßen Lösung ergibt sich insbesondere daraus, dass Langwegküvetten baulich gewöhnlich so ausgebildet sind, dass sich Ein- und Ausgang für den Lichtstrahl an derselben Stirnseite befindet. Diese bauliche Spezialität der Langwegküvetten macht diese für die erfindungsgemäße Kombination mit dem gattungsgemäßen Gasanalysator geeignet. Die zur Realisierung des Erfindungsgegenstandes erforderlichen baulichen Modifikationen an beiden Grundgeräten sind im Hinblick auf den gewonnen Nutzen recht gering. Denn es wird insgesamt ein einfacher NDIR-Gasanalysator realisiert, welcher kleine Messbereiche erlaubt und gleichzeitig die Vorteile der NDIR-Technik nutzt. Neben dem einfachen Aufbau bezieht sich dies insbesondere auf die Messung weiterer Gaskomponenten durch weitere hinzugeschaltete Detektoren sowie Anwendbarkeit der strömenden Vergleichsgasmessung.

Vorzugsweise umfassen die Spiegelmittel zum Auftrennen des Strahlenganges einen ersten Umlenkspiegel, der den so ausgekoppelten Lichtstrahl eingangsseitig der Langwegküvette zuführt, wobei der ausgangsseitig der Langwegküvette verlassende Lichtstrahl über einen zweiten Umlenkspiegel wieder in den normalen Strahlengang der Messküvette eingekoppelt, also zurückgeführt wird. Um eine vorzugsweise senkrechte Ausrichtung der Langwegküvette, also deren Längsachse, zur Längsachse der Messküvette des NDIR-Gasanalysators zu erzielen, sind beide Umlenkspiegel in einem Winkel von 45° zum Strahlengang ausgerichtet. In dieser bevorzugten Positionierung lässt sich die Langwegküvette in besonders einfacher Weise über Dichtungen lösbar an der Messküvette befestigen. Zur Befestigung können beispielsweise Klemmringe verwendet werden, welche um die Messküvette verschraubt werden.

Gemäß einer weiteren, die Erfindung verbessernden Maßnahme wird vorgeschlagen, beide Umlenkspiegel zu einer blockartigen Baueinheit zusammenzufassen, welche sich in besonders einfacher Weise innerhalb der Messküvette im Bereich der Trennstelle zur Ankopplung der Langwegküvette befestigen lässt. Die Befestigung der Baueinheit kann beispielsweise durch Kleben erfolgen. Vor der Aushärtung des Klebers ist durch entsprechende Fixierung die exakte Positionierung der die Baueinheit enthaltenden Umlenkspiegel relativ zur Messküvette durchzuführen. Die Umlenkspiegel können auch sphärisch ausgebildet sein, so dass der Lichtstrahl der IR-Strahlungsquelle auf den Eingangsspalt der Langwegküvette abgebildet wird und der Ausgangsspalt der Langwegküvette auf den Detektor.

Vorzugsweise umfasst die Langwegküvette insgesamt drei sphärische Spiegel, welche konvokal zueinander innerhalb der Langwegküvette angeordnet sind. Durch diese Spiegel wird der Lichtstrahl innerhalb der Langwegküvette mehrfach gefaltet, um dann wieder zurück in den Strahlengang des NDIR-Gasanalysators eingekoppelt zu werden.

Mit dem Einsatz von vorzugsweise drei sphärischen Spiegeln lässt sich m Zusammenhang mit den erforderlichen äußeren geometrischen Abmessungen des Erfindungsgegenstandes ein Optimum aus einen möglichst kompakten Aufbau bei gleichzeitig hoher Messqualität erzielen. Durch einen entsprechenden Mehraufwand an Bauteilen, insbesondere Spiegeln, und Vergrößerung der äußeren geometrischen Abmessungen lassen sich auch längere Strahlengänge realisieren.

Gemäß einer weiteren, die Erfindung verbessernden Maßnahmen ist vorgesehen, dass die Langwegküvette über ein Fenster gasmäßig von der Umgebung abgetrennt ist. Der Lichtstrahl tritt durch das Fenster ein- und ausgangsseitig hindurch. Über Gaszu- und Abführanschlüsse kann das Messgas durch die Langwegküvette geleitet werden. Wegen der Entkopplung vom optischen Aufbau lässt sich die Langwegküvette auch räumlich vom NDIR-Gasanalysator getrennt und freiliegend aufbauen, was eine günstige Voraussetzung dafür schafft, die Langwegküvette mit Mitteln zur Einstellung einer Soll-Temperatur auszustatten. Hiermit ist ein Beheizen der Langwegküvette möglich, ohne dass die innere Anordnung durch eine erhöhte Temperatur beeinträchtigt werden kann.

Vorteilhafterweise sollte der Detektor des erfindungsgemäßen Gasanalysators nach Art eines opto-pneumatischen 2-Schichtdetektors zwecks Selektivitätserhöhung ausgebildet sein. Dieser spezielle Detektor ist für bestimmte Störkomponenten so abgeglichen, dass keine Störanzeige auch bei langen Absorptionsstrecken erfolgt. Der Detektor ist vorzugsweise strahlungsdurchlässig und enthält rückwärtig einen Spiegel, der einen QE-Abgleich erlaubt. Im Rahmen der vorliegenden Erfindung ist es ausreichend, wenn ein einziger Detektor vorgesehen ist, auf welchen die die Messküvette verlassenden Mess- und Vergleichsstrahlen abwechselnd treffen. Eine entsprechende Taktsteuerung ist aus dem allgemeinen Stand der Technik bekannt und lässt sich in einfacher Weise auch beim Erfindungsgegenstand umsetzen.

Die Wellenlänge des den erfindungsgemäßen NDIR-Gasanalysator durchleuchtenden Lichtstrahls beträgt für den Mess- und für den Vergleichsstrahl vorzugsweise zwei bis vier Meter. Die Wellenlänge ist dabei fest eingestellt.

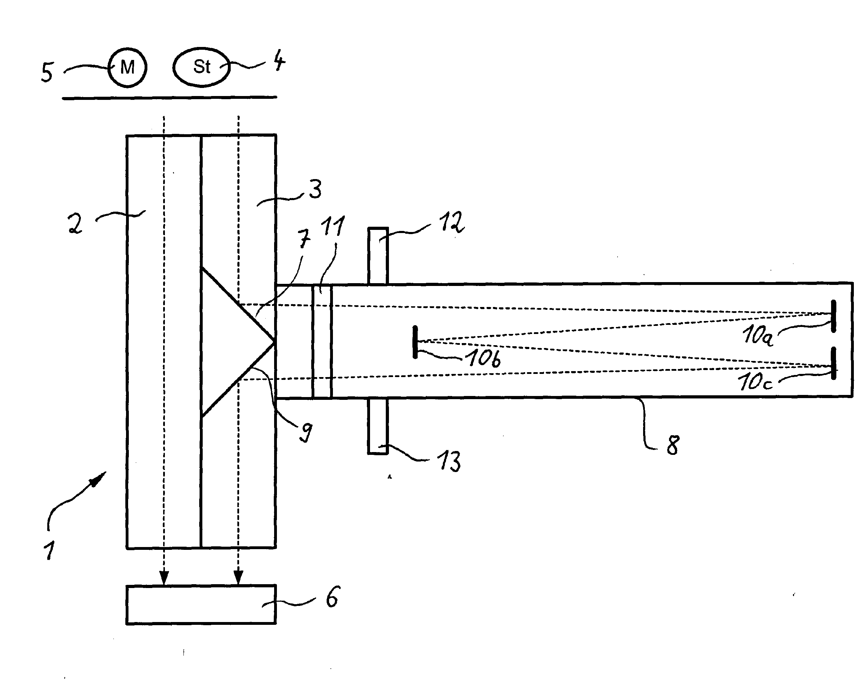

Weitere, die Erfindung verbessernde Maßnahmen werden nachstehend gemeinsam mit der Beschreibung eines bevorzugten Ausführungsbeispiels der Erfindung näher dargestellt. Die einzige Figur zeigt den schematischen Aufbau eines erfindungsgemäßen nichtdispersiven Infrarot-Gasanalysators.

Gemäß Figur umfasst der nichtdispersive Infrarot-Gasanalysator eine Messküvette 1, welche in eine Messkammer 2 sowie eine längs hierzu benachbart angeordnete Vergleichskammer 3 unterteilt ist. Der Strahlengang innerhalb der Vergleichskammer 3 ist spülbar und wird mit Vergleichsgas in an sich bekannter Weise betrieben. Der Strahlengang innerhalb der Messkammer 2 ist gasdicht ausgeführt. Eingangsseitig der Messküvette 1 ist eine IR-Strahlungsquelle 4 mit Modulationseinrichtung 5 angeordnet. Von der IR-Strahlungsquelle 4 werden Messkammer 2 und Vergleichskammer 3 parallel durchleuchtet, wobei deren jeweils durch Absorptionsverluste geschwächter Lichtstrahl von einem ausgangsseitig angeordneten Detektor 6 zur Gaskonzentrationsermittlung erfasst wird. Der Detektor 6 ist in diesem Ausführungsbeispiel als opto-pneumatischer 2-Schichtdetektor ausgeführt. Mess- und Vergleichsstrahl, welche durch die Messküvette 1 hindurchlaufen, werden über eine entsprechende - nicht weiter dargestellte - Steuerung abwechselnd auf den Detektor 6 gelenkt.

Im Bereich der Messkammer 2 sind Spiegelmitteln zum Auftrennen des Strahlengangs der Messkammer 2 vorgesehen, welche aus einem ersten Umlenkspiegel 7 bestehen, der den so aus der Messkammer 2 ausgekoppelten Lichtstrahl eingangsseitig einer in diesem Bereich angefügten Langwegküvette 8 zuführt. Hierbei ist der Umlenkspiegel in einem Winkel von 45° zum Strahlengang der Messkammer 2 ausgerichtet, so dass die Längsachse der Langwegküvette 8 senkrecht zur Messküvette 1 verläuft. Die Langwegküvette 8 ist rohrartig ausgebildet und über - nicht weiter dargestellte - Dichtungen lösbar an der Trennstelle an die Messküvette 1 befestigt. Der ausgangsseitig die Langwegküvette 8 verlassende Lichtstrahl wird über einen zweiten Umlenkspiegel 9 wieder in den normalen Strahlengang der Messküvette 2 eingekoppelt und gelangt so zum Detektor 6. Auch der zweite Umlenkspiegel 9 ist in einem Winkel von 45° zum Strahlengang der Messkammer 2 ausgerichtet. Beide Umlenkspiegel 7 und 8 sind zu einer blockartigen Baueinheit zusammengefasst, welche im Bereich der Messkammer 2 der Messküvette 1 entsprechend des gewünschten Strahlengangs befestigt ist.

Die Langwegküvette 8 beinhaltet insgesamt 3 sphärische Spiegel 10a-10c, welche konvokal zueinander angeordnet sind, um die gewünschte Wegstrecke für den Strahlengang zu realisieren. Die Langwegküvette 8 ist gasmäßig über ein Fenster 11 von der Umgebung abgetrennt. Durch das Fenster 11 tritt der Lichtstrahl ein- und ausgangsseitig ungehindert hindurch. Weiterhin weist die Langwegküvette 8 einen Gaseinlass 12 sowie einen Gasauslass 13 auf, durch welche während des Betriebs Messgas geleitet wird.

### Bezugszeichenliste

- 1: Messküvette
- 2: Messkammer
- 3: Vergleichskammer
- 4: IR-Strahlungsquelle
- 5: Modulationseinrichtung
- 6: Detektor
- 7: erster Umlenkspiegel
- 8: Langwegküvette
- 9: zweiter Umlenkspiegel
- 10: Spiegel
- **11**: Fenster
- 12: Gaseinlass
- 13: Gasauslass

## Patentansprüche

1. Nichtdispersiver Infrarot-Gasanalysator zur Messung von Gaskonzentrationen, umfassend eine in eine Messkammer (2) sowie eine längs hierzu benachbart angeordnete Vergleichskammer (3) unterteilte Messküvette (1), welche eine eingangsseitig angeordnete IR-Strahlungsquelle (4) mit Modulationseinrichtung (5) längs parallel durchleuchtet, deren jeweils durch Absorptionsverluste geschwächter Lichtstrahl mindestens ein ausgangsseitig angeordneter Detektor (6) zur Gaskonzentrationsermittlung erfasst,
**dadurch gekennzeichnet, dass** Spiegelmittel zum Auftrennen des Strahlengangs der Messkammer (2) vorgesehen sind, um diesen durch eine an der Trennstelle an die Messküvette (1) angefügte Langwegküvette (8) zu leiten.

2. Nichtdispersiver Infrarot-Gasanalysator nach Anspruch 1,
**dadurch gekennzeichnet, dass** die Spiegelmittel zum Auftrennen des Strahlengangs einen ersten Umlenkspiegel (7) umfassen, der den so ausgekoppelten Lichtstrahl eingangsseitig der Langwegküvette (8) zuführt, wobei der ausgangsseitig die Langwegküvette (8) verlassende Lichtstrahl über einen zweiten Umlenkspiegel (9) wieder in den normalen Strahlengang der Messküvette (1) eingekoppelt wird.

3. Nichtdispersiver Infrarot-Gasanalysator nach Anspruch 2,
**dadurch gekennzeichnet, dass** beide Umlenkspiegel (7, 9) in einem Winkel von 45° zum Strahlengang ausgerichtet sind, so dass die Langwegküvette (8) senkrecht zur Messküvette (1) angeordnet ist.

4. Nichtdispersiver Infrarot-Gasanalysator nach Anspruch 1,
**dadurch gekennzeichnet, dass** die Langwegküvette (8) rohrartig ausgebildet ist und über Dichtungen lösbar an der Messküvette (1) befestigt ist.

5. Nichtdispersiver Infrarot-Gasanalysator nach Anspruch 2,
**dadurch gekennzeichnet, dass** beide Umlenkspiegel (7, 9) zu einer blockartigen Baueinheit zusammengefasst sind, die innerhalb der Messküvette (1) im Bereich der Trennstelle befestigt ist.

6. Nichtdispersiver Infrarot-Gasanalysator nach Anspruch 2,
**dadurch gekennzeichnet, dass** beide Umlenkspiegel (7, 9) sphärisch ausgebildet sind.

7. Nichtdispersiver Infrarot-Gasanalysator nach Anspruch 1,
**dadurch gekennzeichnet, dass** die Langwegküvette (8) insgesamt drei sphärische Spiegel (10a - 10c) umfasst, welche konfokal zueinander angeordnet sind.

8. Nichtdispersiver Infrarot-Gasanalysator nach Anspruch 1,
**dadurch gekennzeichnet, dass** die Langwegküvette (8) über ein Fenster (11) zur gasmäßigen Abtrennung von der Umbebung ausgestattet ist, durch welches der Lichtstrahl ein- und ausgangseitig hindurchtritt.

9. Nichtdispersiver Infrarot-Gasanalysator nach einem der vorstehenden Ansprüche,
**dadurch gekennzeichnet, dass** die Langwegküvette (8) mit Mittel zur Einstellung einer Solltemperatur ausgestattet ist.

10. Nichtdispersiver Infrarot-Gasanalysator nach einem der vorstehenden Ansprüche,
**dadurch gekennzeichnet, dass** der Detektor (6) nach Art eines optopneumatischen 2-Schicht-Detektors ausgeführt ist.

11. Nichtdispersiver Infrarot-Gasanalysator nach einem der vorstehenden Ansprüche,
**dadurch gekennzeichnet, dass** die als Mess- und Vergleichsstrahl durch die Messküvette (1) hindurchlaufenden Lichtstrahlen abwechselnd auf den einzigen Detektor (6) treffen.

12. Nichtdispersiver Infrarot-Gasanalysator nach einem der vorstehenden Ansprüche,
**dadurch gekennzeichnet, dass** die Wellenlänge des Mess- und Vergleichsstrahls im Bereich von 2 bis 4 m liegt.
